# EUROPEAN PATENT APPLICATION

(11) **EP 3 734 521 A1**
(43) Date of publication of application: **04.11.2020**
(21) Application number: 20171618.0
(22) Date of filing: 27.04.2020
(51) Int. Cl.: G06Q 10/00, G06Q 10/06, G06Q 10/10, G06Q 50/10

(54) **CONTACT CENTER TRANSACTION SYSTEM THAT USES A DISTRIBUTED DIGITAL LEDGER**

(30) Priority: 02.05.2019 US 201916402069
(71) Applicant: Avaya Inc., Santa Clara, CA 95054-1233 (US)
(72) Inventor: YOUNG, John, Buntingford, SG9 9SL (GB); DEOLE, Pushkar,Yashavant, 411052 Pune (IN); CHAVEZ, David, Broomfield, Colorado 80023 (US); PHILONENKO, Laurent, San Francisco, California 94123 (US)
(74) Representative: Williams, David John

(57) **Abstract**

An acceptance of an end user license is received from a user communication endpoint. The acceptance of the end user license causes a smart contract to associate a number of digital tokens (i.e., digital currency) with a user of the user communication endpoint. For example, the user may electronically agree to abide by terms associated with transactions within a contact center. A communication session is established between the user communication endpoint and the contact center. Input is received that indicates that the user wants to have a transaction with the contact center. For example, the transaction may be that the user wants to be moved to the top of a contact center queue. The transaction causes a change to the number of digital tokens associated with the user. The change in digital tokens is then stored in a blockchain associated with the contact center.

## Description

### FIELD

The disclosure relates generally to contact centers and particularly to transaction management in a contact center.

### BACKGROUND

In today's contact centers, there are a limited number of means for influencing the customer's behaviors that may be beneficial to the contact center. For example, while customers are given options to route a communication session (e.g., having a voice call be routed to a contact center queue that supports a specific product), in most cases, the customer is not incentivized to make specific routing choices. Instead, the customer just calls in and is routed within the contact center based on predefined rules.

### SUMMARY

These and other needs are addressed by the various embodiments and configurations of the present disclosure. What is described are various interaction methods between contact center(s) and users (e.g., customers). The interaction methods are based on the use of blockchain(s) as a means of transferring digital tokens between the users and the contact center(s). In one embodiment, an acceptance of an end user agreement is received from a user communication endpoint. The end user agreement is between the user and a contact center. The end user agreement causes a smart contract to be executed. The smart contract defines how digital tokens are transferred between a digital wallet of the user and a digital wallet of the contact center. The smart contract causes a number of digital tokens (i.e., digital currency) to be associated with the digital wallet of the user. For example, the user may electronically agree to abide by terms associated with transactions within a contact center. A communication session is established between the user communication endpoint and the contact center. Input is received that indicates that the user wants to have a transaction with the contact center. For example, the transaction may be that the user wants to be moved to the top of a contact center queue. The transaction causes a change to the number of digital tokens associated with the digital wallet of the user/digital wallet of the contact center. The change in digital tokens is then stored in a blockchain associated with the contact center. The blockchain is a type of a digital ledger.

The phrases "at least one", "one or more", "or", and "and/or" are open-ended expressions that are both conjunctive and disjunctive in operation. For example, each of the expressions "at least one of A, B and C", "at least one of A, B, or C", "one or more of A, B, and C", "one or more of A, B, or C", "A, B, and/or C", and "A, B, or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material".

Aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Any combination of one or more computer readable medium(s) may be utilized. The computer readable medium may be a computer readable signal medium or a computer readable storage medium.

A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to wireless, wireline, optical fiber cable, RF, etc., or any suitable combination of the foregoing.

The terms "determine", "calculate" and "compute," and variations thereof, as used herein, are used interchangeably and include any type of methodology, process, mathematical operation or technique.

The term "means" as used herein shall be given its broadest possible interpretation in accordance with 35 U.S.C., Section 112(f) and/or Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary, brief description of the drawings, detailed description, abstract, and claims themselves.

The term "blockchain" as described herein and in the claims refers to a growing list of records, called blocks, which are linked using cryptography. The blockchain is commonly a decentralized, distributed and public digital ledger that is used to record transactions across many computers so that the record cannot be altered retroactively without the alteration of all subsequent blocks and the consensus of the network. Each block contains a cryptographic hash of the previous block, a timestamp, and transaction data (generally represented as a merkle tree root hash). For use as a distributed ledger, a blockchain is typically managed by a peer-to-peer network collectively adhering to a protocol for inter-node communication and validating new blocks. Once recorded, the data in any given block cannot be altered retroactively without alteration of all subsequent blocks, which requires consensus of the network majority. In verifying or validating a block in the blockchain, a hashcash (or other algorithm) algorithm generally requires the following parameters: a service string, a nonce, and a counter. The service string can be encoded in the block header data structure, and include a version field, the hash of the previous block, the root hash of the merkle tree of all transactions (or information or data) in the block, the current time, and the difficulty level. The nonce can be stored in an extraNonce field, which is stored as the left most leaf node in the merkle tree. The counter parameter is often small at 32-bits so each time it wraps the extraNonce field must be incremented (or otherwise changed) to avoid repeating work. When validating or verifying a block, the hashcash algorithm repeatedly hashes the block header while incrementing the counter & extraNonce fields. Incrementing the extraNonce field entails recomputing the merkle tree, as the transaction or other information is the left most leaf node. The body of the block contains the transactions or other information. These are hashed only indirectly through the Merkle root.

As defined herein and in the claims, the term "transaction" may be any type of transaction with a contact center that causes the exchange of digital tokens. For example, a transaction may be a request to prioritize shipping, a request to purchase a product or service, a request to increase a wait time in a contact center queue, a request to decrease a wait time in the contact center queue, a request to bypass the contact center queue, a request to prioritize a trouble ticket, a request to modify an Interactive Voice Response (IVR) menu (e.g., to provide options that other users don't have), a request to direct a communication session to a specific contact center agent, a request to change a destination contact center queue (e.g., to request a higher or lower priority contact center queue), a request to change a communication session modality (e.g., escalate a text messaging session to a voice call or deescalate a voice call to an email or chat communication session), using a self-service option (instead of working with a live contact center agent), a scheduled callback, and/or the like.

The term "digital token" as referred herein and in the claims is a form of digital currency (i.e., a virtual currency) that is used by a contact center. A digital token may refer to existing digital currencies, such as Bitcoin. The digital token is implemented by using a custom DLT/Blockchain smart contract. A smart contract is deployed to programmatically to exchange digital tokens from one counterparty to the other once an agreement has been finalized. The types of programming languages used to implement smart contracts include Solidity (Ethereum) and Go (Hyperledger Fabric). The digital token leverages some of the concepts that are associated with the proposed Non-Fungible Ethereum Token standard (i.e. ERC 721). As part of the proposed invention, new meta-data extensions have been defined to support integrations with both the contact center and RCS mobility environments. Two potential methods can be used to access the digital token meta-data. The meta-data can either be included in parametric form as part of the digital token smart contract, or as a vector that can securely reference the meta-data off-chain within a separate data repository. Since it can be more expensive to share meta-data in parametric form and is arguably less secure, the use of a vector reference is recommended. Digital token meta-data may be based on UUID - RFC 4122).

As described herein and in the claims, when referring to digital tokens, a number of digital tokens may include any number of digital tokens from zero to N, where N is an integer (either positive or negative).

The preceding is a simplified summary to provide an understanding of some aspects of the disclosure. This summary is neither an extensive nor exhaustive overview of the disclosure and its various embodiments. It is intended neither to identify key or critical elements of the disclosure nor to delineate the scope of the disclosure but to present selected concepts of the disclosure in a simplified form as an introduction to the more detailed description presented below. As will be appreciated, other embodiments of the disclosure are possible utilizing, alone or in combination, one or more of the features set forth above or described in detail below. Also, while the disclosure is presented in terms of exemplary embodiments, it should be appreciated that individual aspects of the disclosure can be separately claimed.

### BRIEF DESCRIPTION OF THE DRAWINGS

Fig. 1 is a block diagram of a first illustrative system for managing transactions using a blockchain.
Fig. 2 is a flow diagram of a process establishing a smart contract with a contact center.
Fig. 3 is a flow diagram of a process for managing transactions and storing the transactions in a digital ledger of blockchains.
Fig. 4 is a flow diagram of a process for acquiring additional digital tokens for use within a contact center.

### DETAILED DESCRIPTION

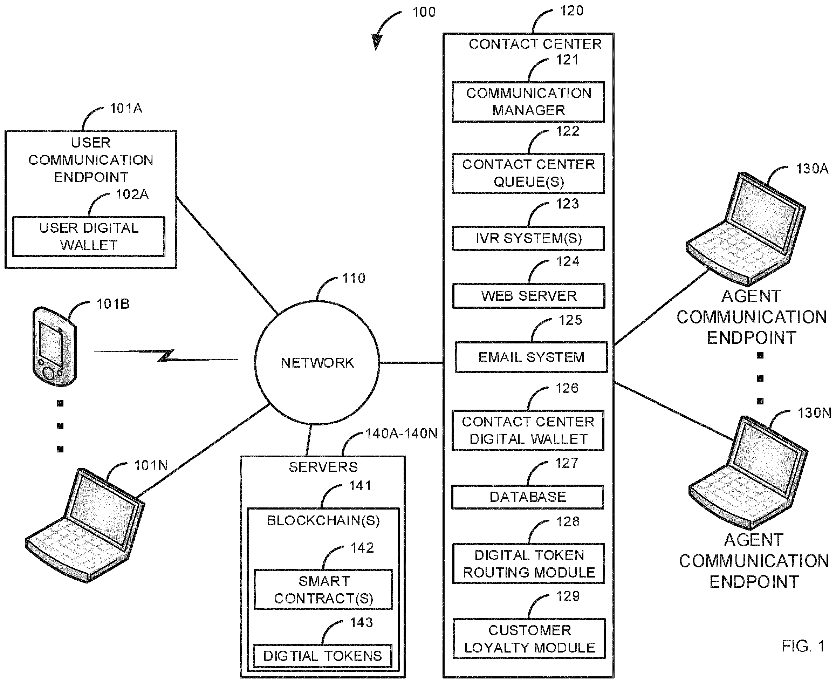

Fig. 1 is a block diagram of a first illustrative system 100 for managing transactions using a blockchain 141. The first illustrative system 100 comprises user communication endpoints 101A-101N, a network 110, a contact center 120, agent communication endpoints 130A-130N, and servers 140A-140N.

The user communication endpoints 101A-101N can be or may include any user communication endpoint device that can communicate on the network 110, such as a Personal Computer (PC), a telephone, a video system, a cellular telephone, a Personal Digital Assistant (PDA), a tablet device, a notebook device, a smartphone, a laptop computer, and/or the like. The user communication endpoints 101A-101N are devices where a communication sessions terminate. The user communication endpoints 101A-101N are not network elements that facilitate and/or relay a communication session in the network, such as a communication manager 121 or router. As shown in Fig. 1, any number of user communication endpoints 101A-101N may be connected to the network 110.

The user communication device 101A further comprise a user digital wallet 102A. The user digital wallet 102A is a software program that allows a user to purchase/manage digital tokens 143. The user digital wallet 102A can be used for various types of transactions within the contact center 120. In addition, the digital wallet 102A may work with multiple contact centers 120 (e.g., multiple contact centers 120 of different vendors). The user digital wallet 102A has a user interface that allows the user to initiate and manage various types of transactions with the contact center 120. In one embodiment, the user digital wallet 102A may be provided by the web server 124 via a browser in the user communication endpoint 101A. Alternatively, the user digital wallet 102A may be an application that is installed in the user communication endpoint 101A.

While not shown for convenience, the user communication endpoints 101B-101N may also comprise a digital wallet 102. In addition, while not shown for convenience, the user communication endpoints 101A-101N may comprise other elements, such as, a microprocessor, a display, applications, and/or the like.

The network 110 can be or may include any collection of communication equipment that can send and receive electronic communications, such as the Internet, a Wide Area Network (WAN), a Local Area Network (LAN), a Voice over IP Network (VoIP), the Public Switched Telephone Network (PSTN), a packet switched network, a circuit switched network, a cellular network, a combination of these, and the like. The network 110 can use a variety of electronic protocols, such as Ethernet, Internet Protocol (IP), Session Initiation Protocol (SIP), Integrated Services Digital Network (ISDN), H.323, Web Real-Time Communication (WebRTC) protocol, video protocols, email protocols, text messaging protocols, Instant Messaging (IM) protocols, and/or the like. Thus, the network 110 is an electronic communication network configured to carry messages via packets and/or circuit switched communications.

The contact center 120 can be or may include any hardware coupled with software that can manage transactions and route communication sessions between the user communication endpoints 101A-101N and the agent communication terminals 130A-130N. The contact center 120 further comprises a communication manager 121, contact center queue(s) 122, Interactive Voice Response (IVR) system(s) 123, a web server 124, an email system 125, a contact center digital wallet 126, a database 127, a digital token routing module 128, and a customer loyalty module 129.

The communication manager 121 can be or may include any hardware coupled with software that can manage and route communications in the contact center 120, such as a Private Branch Exchange (PBX), a proxy server, a session manager, an Instant Messaging (IM) server, text messaging server, a video router, and/or the like.

The contact center queue(s) 122 can be or may include any computer construct that holds a communication session until it can be processed by a contact center agent. The contact center queue(s) 122 can hold voice communication sessions, video communication sessions, IM communication sessions, text messages, emails, and/or the like.

The Interactive Voice Response (IVR) system(s) 123 can be or may include any hardware coupled with software that can verbally interact with a user. The IVR system(s) 123 typically provides a series of menus that allow a user communication session (e.g., a voice call) to be routed to a specific contact center queue 122 and/or contact center agent. The IVR system(s) 123 may also include a video/text based IVR system.

The web server 124 can be any known web server 124, such as Apache™, Microsoft Information Services(tm), Nginx™, and/or the like. The web server 124 may provide various services for the contact center 120, such as, a self-service application, a click to call service, a social media service, an email service, a chat service, and/or the like.

The email system 125 manages emails that are sent to and from the contact center 120. The email system 125 may also comprise a calendaring system.

The contact center digital wallet 126 tracks digital tokens 143 that are owned by the contact center 120. For example, when a user spends digital tokens 143, a corresponding amount of digital tokens 143 are credited to the contact center digital wallet 126.

The database 127 can be or may include any type of data storage, such as, a relational database, a file system, an objected-oriented database, a directory service, and/or the like. The database 127 can be used to store one or more transaction records. A transaction record typically contains private customer information that is associated with a transaction. For security and data privacy reasons, the transaction records typically includes the user's personal information (stored separately from the blockchain 141). However, the transaction records may contain any information associated with the transaction, such as, a user name, a user address, communication session identifier(s), a transaction type (expediting a voice call to the top of a contact center queue 122), a product or service name, a transaction treatment (e.g., prioritizing a trouble ticket), a location of the user, a time of the transaction, a date of the transaction, a history of the communication session as the communication session progresses through the contact center 120, and/or the like.

In one embodiment, the database 127 may be separate from the contact center 120. For example, the database 127 may be on a secure server that is part of a centralized database 127 that includes the personal information associated with the transaction/digital token 143.

The digital token routing module 128 works in conjunction with the user digital wallet 102/contact center digital wallet 126/customer loyalty module 129. The digital token routing module 128 may contain various rules for management of transaction that affect the digital tokens 143. The digital token routing module 128, based on a user transaction associated with routing a communication session (e.g., how a voice call is routed in the contact center 120) causes digital token(s) 143 to be debited and/or credited to the user digital wallet 102/contact center digital wallet 126. For example, if the user makes a request to wait in a contact center queue 122 for longer than normal (e.g., via the IVR system 123), the digital token routing module 128, based on input received from the smart contract 142, will send information to credit the user digital wallet 102 with additional digital tokens 143 and debit the contact center digital wallet 126 with a corresponding amount of digital tokens 143. The rule(s) for debiting/crediting the user digital wallet 102 and the contact center digital wallet 126 may be based on a smart contract 142 and/or the customer loyalty module 129.

The customer loyalty module 129 works in conjunction with the user digital wallet 102/contact center digital wallet 126. The customer loyalty module 129 may contain various rules, logic, and/or algorithms for management of the digital tokens 143. The customer loyalty module 129 typically includes rules that define how transactions affect the exchange of digital tokens 143 between the user digital wallet 102 and the contact center digital wallet 126. The customer loyalty module 129, based on one or more transactions associated with customer loyalty (e.g., being a repeat customer) causes digital tokens 143 to be debited and/or credited to the user digital wallet 102/contact center digital wallet 126 based on rules in the smart contract 142. For example, a repeat customer (user) may be credited with additional digital tokens 143 to be used for further transactions with the contact center 120.

Another example is where a user calls up and spends five minutes of time to avail the services of the contact center 120 and later on avails the services of contact center 120 by spending certain amount of money. In this example, the customer loyalty module 129 has algorithms/rules that calculate and accumulate a defined number of digital tokens 143 to user digital wallet 102 based on the interaction.

In another example, the user may choose to wait longer than normal in the contact center queue 122. In this case, the customer loyalty module 129 calculates the number of digital tokens 143 according to algorithms/rules defined in the customer loyalty module 129 and then credits the calculated number of digital tokens 143 in the user digital wallet 102.

In yet another example, the user may choose to move up in the contact center queue 122 and prioritize his/her call. In this case, the number of digital tokens 143 to be debited are computed by the customer loyalty module 129. The user digital wallet 102 is debited the computed number of digital tokens 143 and the contact center digital wallet 126 is credited with the same number of digital tokens 143.

Although not shown for convenience, the contact center 120 may comprise other elements, such as, an IM server, a conferencing service, a voicemail system, and/or the like.

The servers 140A-140N comprise blockchain(s) 141. The servers 140A-140N can be or may include any servers 140 that can be used to keep a digital ledger. A digital ledger is where multiple copies of the same blockchain(s) 141 are stored on separate servers 140A-140N in order to validate a transaction. The digital ledger typically has copies of a single blockchain 141 that is used for all transactions (for multiple users of the contact center 120) in the contact center 120. When a new transaction occurs in the contact center 120, if the transaction is validated, a new block is added to the blockchains 141 on each of the servers 140A-140N to keep a record of the transaction. In one embodiment there may be a separate blockchain 141 associated with each user.

The blockchains 141 further comprise smart contract(s) 142 and digital tokens 143. The smart contract(s) 142 are executed based on the user interacting with the user digital wallet 102. Within the smart contract 142 are typically one or more basic rules for determining how to debit/credit digital tokens 143 based on various types of transactions that may occur in/with the contact center 120. The smart contract 142 is executable software that is stored with the blockchain(s) 141. There is typically one smart contract 142 that is used by the contact center 120. However, in one embodiment, there may be multiple smart contracts 142 that are associated with a single contact center 120. For example, there may be two different smart contracts 142 for different products/customer support programs that are used by different users and/or the same user. When a transaction occurs, the smart contract 142 is executed. The smart contract 142 blockchain software validates the transaction. If the transaction is validated, a credit/debit of the digital tokens 143 (i.e., the digital tokens 143 owned by contact center/user) is added in the form of a transaction within a new block in the blockchain 141. The debit/credit is then propagated to the user digital wallet 102/contact center digital wallet 126. In one embodiment, there may be a separate blockchain 141 in the digital ledger for each executable smart contract 142 that is stored with the blockchain 141.

The smart contract 142 contains a start-up function that runs only once, when the smart contract 142 is first uploaded from the network 110. This function would set the initial balance of digital tokens 143 in the contact center digital wallet 126. The smart contract 142 may also include a transfer function that is called in order to transfer/move digital tokens 143 from one digital wallet (102/126) to another. The transfer function may include function arguments for a recipient (e.g. blockchain address of recipient's account) and a value (i.e. the number of tokens to transfer). A balance checking function may also be included within the smart contract 142 to ensure that the user has a sufficient number of digital tokens 143 prior to completing the transfer. The smart contract 142 can be defined in such a way that negative balances are not permitted - or alternatively they can be handled as "debt". The smart contract 142 may also include support for event functions. The smart contract 142 calls these event functions to ensure that progress events are shared with the user as the smart contract 142 executes.

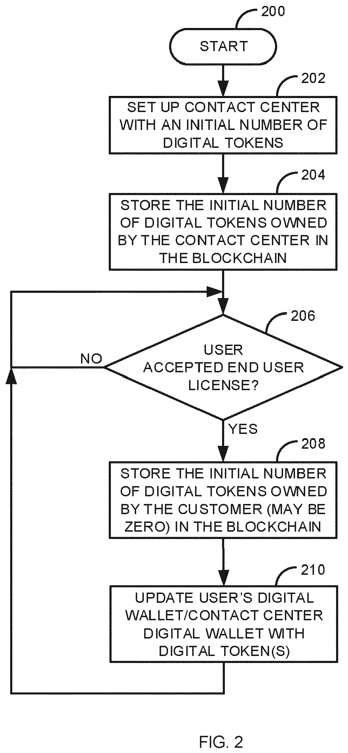

Fig. 2 is a flow diagram of a process establishing a smart contract 142 with a contact center 120. Illustratively, user communication endpoints 101A-101N, the user digital wallet 102A, the contact center 120, the communication manager 121, the contact center queue(s) 122, the IVR system(s) 123, the web server 124, the email server 125, the digital contact center wallet 126, the database 127, the digital token routing module 128, the customer loyalty module 129, the agent communication endpoints 130A-130N, the servers 140A-140N, the blockchain(s) 141, the smart contracts 142, and the digital tokens 143 are stored-program-controlled entities, such as a computer or microprocessor, which performs the method of Figs. 2-4 and the processes described herein by executing program instructions stored in a computer readable storage medium, such as a memory (i.e., a computer memory, a hard disk, and/or the like). Although the methods described in Figs. 2-4 are shown in a specific order, one skilled in the art would recognize that the steps in Figs. 2-4 may be implemented in different orders and/or be implemented in a multi-threaded environment. Moreover, various steps may be omitted or added based on implementation.

The process of Fig. 2 starts in step 200. When the contact center 120 is initially setup, the contact center 120 is initially given a defined number of digital tokens 143 in step 202. The contact center 120 may be given the initial number of digital tokens 143 based on certain criteria and/or an investment. For example, the contact center 120 may work in conjunction with other contact centers 120/enterprises and the number of digital tokens 143 initially given to the contact center 120 may be based on an initial investment by each contact center 120/enterprise. The initial number of digital tokens 143 owned by the contact center 120 is then stored in the blockchains 141 (i.e., as the first block) in step 204. In this example, the user digital wallet 102 will be able to exchange digital tokens 143 with each of the contact centers 120.

The process determines, in step 206, if the user has accepted an end user license. For example, the user digital wallet 102 may provide the end user license in a user interface that is displayed to the user the first time the user opens the user digital wallet 102. After reading through the terms of the end user license, the user can agree to accept the terms of the end user license or not. If the user does not accept the terms of the end user license, the process of step 206 repeats. If the user does not accept the terms of the end user license, the user will not be able to initiate any transactions with the contact center 120. However, the user may still be able to access non-transaction related features without accepting the end user license.

If the user accepts the terms of the end user license in step 206, the smart contract 142 updates the blockchains 141 in the servers 140A-140N in step 208. For example, if the user is given one hundred initial digital tokens 143 (e.g., as an incentive for signing the end user license), the smart contract 142 updates the blockchains 141 in the digital ledger by creating a new block that indicates that the user digital wallet 102 now has one hundred digital tokens 143 and that the contact center digital wallet 126 has been debited one hundred digital tokens 143. Even if the user is not initially given any digital tokens for accepting the end user license, execution of the smart contract 142 will result in the creation a new block that indicates that the user digital wallet 102 initially does not have any digital tokens 143.

The digital token routing module 128/customer loyalty module 129 updates, based on input from the smart contract 142, in step 210, the user digital wallet 102 to indicate the number of digital tokens 143 that the user is initially given when accepting the end user license (even if zero). In addition, if the contact center digital wallet 126 is to be debited, the digital token routing module 128/customer loyalty module 129 debits the contact center digital wallet 126 to match the number of digital tokens 143 that were credited to the user digital wallet 102. The process then goes back to step 206 to allow a different user to accept the end user license (or for the same user/different user to execute a different end user license). Once a user has accepted to use the end user license, the acceptance of the end user license could be permanently recorded on the blockchain 141 for auditing and compliance reasons. As one could envision, the process of step 202-204 and the step 206-210 may be implemented as separate threads. The process of step 206-210 where the user accepts the end user license typically only occurs once for each user when the user first accesses the user digital wallet 102.

In Fig. 2, the setting up of the digital tokens in the contact center (steps 202/204) may occur separately from the user accepting the end user license. For example, the user may accept the license several months after the contact center has stored its digital tokens 143.

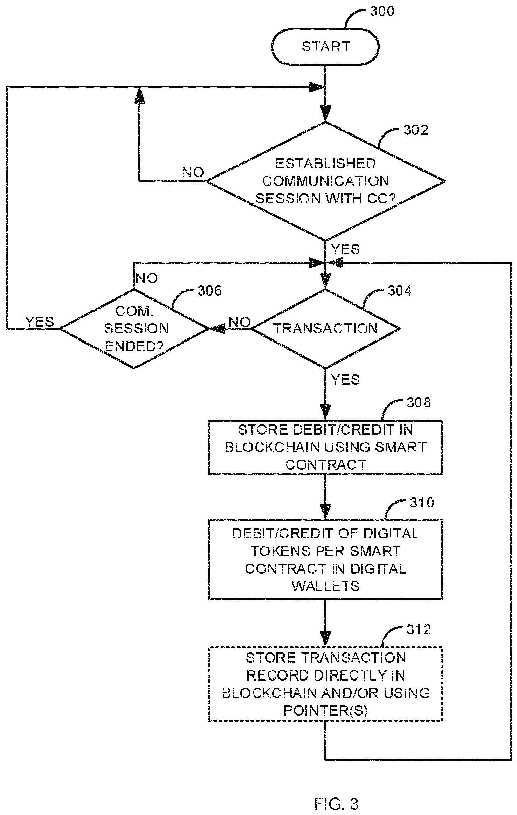

Fig. 3 is a flow diagram of a process for managing transactions and storing the transactions in a blockchains 141. The process starts in step 300. The digital token routing module 128/customer loyalty module 129 determines, via the communication manager 121 in step 302, if a communication session has been established between a user communication endpoint 101 and the contact center 120. A communication session may include various types of communication sessions, such as, a voice communication session, a video communication session, a multimedia communication session, a virtual reality communication session, an Instant Messaging (IM) communication session, a chat communication session, an email communication session, a text messaging communication session, a web based communication session (e.g., where the user is interacting with a web page), and/or the like. The communication session may be initially established from a user communication endpoint 101 or from the contact center 120 (e.g., an outbound voice call made from an autodialer). If a communication session has not been established in step 302, the process of step 302 repeats.

Otherwise, if a communication session has been established in step 302, the digital token routing module 128/customer loyalty module 129 determines, in step 304, if the user wants to initiate a transaction. A transaction may be any transaction that is governed by the smart contract 142/customer loyalty module 129. For example, the transaction may be based on changing how the communication session is routed in the contact center 120, such as, an increased wait time in a contact center queue 122, a decreased wait time in the contact center queue 122, bypassing the contact center queue 122, prioritizing a trouble ticket, a modification of an Interactive Voice Response (IVR) 123 menu, a direct communication to a specific contact center agent, a change of a destination contact center queue 122, a change in a communication session modality (e.g., from text to voice), using a self-service option (e.g., using a web site versus a contact center agent), a schedule callback (e.g., scheduling a callback at a non-peak time), and/or the like.

Alternatively, the transaction may not be based on routing of the communication session. For example, the transaction may be based purchasing a product, based on priority shipping, based on an extended warranty, based on taking a survey, based a time/date of the transaction, based on being a repeat customer, based on a coupon, and/or the like.

Identification of the transaction may come from various sources, such as, from the digital wallet 102 (e.g., where the user selects the transaction via a user interface displayed by the digital wallet 102), from a contact center agent (e.g., where the contact center agent selects the transaction via a user interface), from an Interactive Voice Response (IVR) system (e.g., the user selects priority routing via an IVR menu), from a self-service web page (e.g., the user selects priority shipping via the web page), from a routing system (e.g., from the communication manager 121), and/or the like.

In addition, a Rich Communication Services (RCS) plug-in (e.g., in the user communication endpoint 101) may be used to identify the transaction. For example, the RCS plugin may identify the transaction as being a read receipt on a text message (e.g., by a contact center agent), starting a group chat, changing a modality of the communication session, and/or the like.

If a request for a transaction is not made in step 304, the digital token routing module 128/customer loyalty module 129 determines, via the communication manager 121 in step 306, if the communication session has ended. If the communication session has ended in step 306, the process goes back to step 302. Otherwise, if the communication session has not ended in step 306, the process goes back to step 304.

If a transaction has been requested in step 304, the smart contract 142 stores a debit/credit into the blockchain 141 of the digital ledger in step 308. For example, if the customer loyalty module 129 has a rule that states the user will be given ten digital tokens 143 for waiting in the contact center queue 122 for longer than normal, the smart contract 142 adds a new block to the blockchain 141 in the digital ledger that credits the user digital wallet 102 with ten digital tokens 143 and debits the contact center digital wallet 126 for ten digital tokens 143.

The executed smart contract 142 sends the transfer of digital tokens 143 to the corresponding user digital wallet 102 and the contact center digital wallet 126 (i.e., based on the determined number of digital tokens 143 dictated by the customer loyalty module 129) to debit/credit the appropriate number of digital token(s) 143. For example, using the example discussed above, the user digital wallet (e.g., 102A) is credited with ten digital tokens 143 and the contact center digital wallet 126 is debited ten digital tokens 143.

The smart contract 142 may optionally (indicated by the dashed lines in step 312) store additional information (e.g., personal information) in the blockchain 141/digital ledger in step 312, such as, a user name, a user address, one or more communication session identifiers, a transaction type (e.g., a priority routing, etc.), a product or service name, a transaction treatment (e.g., expedition directly to a contact center agent), a location of the user, a time of the transaction, a date of the transaction, a history of the communication session as the communication session progresses through the contact center 120, a total time of the communication session, a coupon associated with the transaction, and/or the like. However, in one embodiment, for privacy reasons, any personal information associated with the user may only be stored external to the blockchain 141 (e.g., in the database 127). The process then goes to step 304.

Alternatively, the smart contract 142 may store, in step 312, a pointer to a transaction record that is in the database 127. The transaction record may include any of the above information. By using a pointer, personal privacy of the information may be maintained because the blockchain 141 typically comprises blocks for all transactions with the contact center 120 (i.e., for all users of the contact center 120). However, in one embodiment, there may be a separate blockchain 141 for each individual user that is stored in the digital ledger.

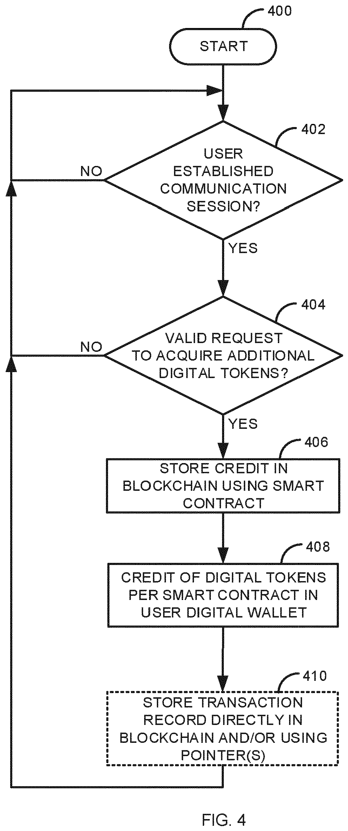

Fig. 4 is a flow diagram of a process for acquiring additional digital tokens 143 for use within a contact center 120. The process starts in step 400. The digital token routing module 128/customer loyalty module 129 determines, in step 402, if the user has established a communication session. For example, the user may make a voice call or access a self-service application provided by the web server 124. If the user has not established a communication session in step 402, the process of step 402 repeats.

Otherwise, if a communication session has been established in step 402, the digital token routing module 128/customer loyalty module 129 determines, in step 404, if the user is making a valid request to acquire additional digital tokens 143. For example, the digital token routing module 128/customer loyalty module 129 can determine that the user is making a valid request to acquire additional digital tokens 125 if the user selected a button/provided user information (e.g., a credit card number) to acquire additional digital tokens 143. If the user is not requesting to acquire additional digital tokens 143 (or the request is invalid (e.g., an invalid credit card number)) in step 404, the process goes back to step 402.

Otherwise, if the user is making a valid request to acquire additional digital tokens 143 in step 404, the smart contract 142 stores, in step 406, a credit in the blockchain 141 with the acquired amount (e.g., purchased amount) of digital tokens 143 credited to the user. The customer loyalty module 129, via the smart contract 142 credits the same amount of digital tokens 143 in the user digital wallet 102 in step 408. The smart contract 142 may optionally store additional information associated with the transaction in step 410 in the blockchain 141 (if defined in the smart contact 142), such as, the user's name, the data/time of the transaction, the user's address, the user's credit card number, and/or the like. The smart contract 142 may optionally store a pointer in the blockchain 141 (e.g., instead of directly storing the information in the blockchain 141) that points to a transaction record that is stored in the database 127 for information (e.g., personal information) that is deemed to be private (or any information defined by the smart contract 142). The transaction record may comprise any or all of the above information. The process then goes to step 402.

Examples of the processors as described herein may include, but are not limited to, at least one of Qualcomm® Snapdragon® 800 and 801, Qualcomm® Snapdragon® 610 and 615 with 4G LTE Integration and 64-bit computing, Apple® A7 processor with 64-bit architecture, Apple® M7 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4670K and i7-4770K 22nm Haswell, Intel® Core® i5-3570K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future-developed standard, instruction set, libraries, and/or architecture.

Any of the steps, functions, and operations discussed herein can be performed continuously and automatically.

However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should however be appreciated that the present disclosure may be practiced in a variety of ways beyond the specific detail set forth herein.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components of the system can be combined in to one or more devices or collocated on a particular node of a distributed network, such as an analog and/or digital telecommunications network, a packet-switch network, or a circuit-switched network. It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire and fiber optics, and may take the form of acoustic or light waves, such as those generated during radio-wave and infra-red data communications.

Also, while the flowcharts have been discussed and illustrated in relation to a particular sequence of events, it should be appreciated that changes, additions, and omissions to this sequence can occur without materially affecting the operation of the disclosure.

A number of variations and modifications of the disclosure can be used. It would be possible to provide for some features of the disclosure without providing others.

In yet another embodiment, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this disclosure can be implemented as program embedded on personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the embodiments with reference to particular standards and protocols, the disclosure is not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various embodiments, configurations, and aspects, includes components, methods, processes, systems and/or apparatus substantially as depicted and described herein, including various embodiments, subcombinations, and subsets thereof. Those skilled in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease and\or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.

Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights which include alternative embodiments, configurations, or aspects to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A contact center comprising:
a microprocessor; and
a computer readable medium, coupled with the microprocessor and comprising microprocessor readable and executable instructions that, when executed by the microprocessor, cause the microprocessor to:
receive a first acceptance of a first end user license from a first user communication endpoint, wherein the acceptance of the first end user license causes a first smart contract to associate a number of digital tokens with a first user associated with the first user communication endpoint;
establish a first communication session between the first user communication endpoint and the contact center;
receive input that identifies a first transaction with the contact center, wherein the first transaction causes a change to the number of digital tokens associated with the first user; and
store the changed number of digital tokens in a first blockchain.

2. The contact center of claim 1, wherein the microprocessor readable and executable instructions further cause the microprocessor to:
store information associated the first transaction in the first blockchain, wherein the stored information comprises a pointer to a first transaction record, wherein first transaction record comprises at least one of: a name of the first user, one or more communication session identifiers, a transaction type, a product or service name, an transaction treatment, a location of the first user, a time of the first transaction, a date of the first transaction, a history of the communication session as the communication session progresses through the contact center, a total time of the communication session, and an identifier of a coupon used in the first transaction.

3. The contact center of claim 1 or claim 2, wherein the first transaction with the contact center changes how the first communication session is routed in the contact center and wherein the first transaction associated with the contact center comprises at least one of: an increased wait time in a contact center queue, a decreased wait time in the contact center queue, bypassing the contact center queue, prioritizing a trouble ticket, a modification of an Interactive Voice Response (IVR) menu, a direct communication to a specific contact center agent, a change of a destination contact center queue, a change in a communication session modality, using a self-service option, and a schedule callback.

4. The contact center of any one of claims 1 to 3, wherein the first smart contract is a software program that is stored with the first blockchain, wherein the first smart contract comprise a plurality of rules that determine how to change the number of digital tokens associated with the first user based on the first transaction.

5. The contact center of claim 4, wherein the microprocessor readable and executable instructions further cause the microprocessor to:
receive a second acceptance of a second end user license from a second user communication endpoint, wherein the second end user license is different from the first end user license, wherein a second smart contract associated with the second end user license comprises a plurality of rules that determine how to change the number of digital tokens associated with a second user of the second communication endpoint based on a second transaction, wherein the second smart contract is a software program that is stored as part of a second blockchain.

6. The contact center of any one of claims 1 to 5, wherein the input that identifies the first transaction with the contact center comes from at least one of a digital wallet on the first communication endpoint, a contact center agent, an Interactive Voice Response (IVR) system, a self-service web page, a Rich Communication Services (RCS) plug-in, and a routing system.

7. The contact center of any one of claims 1 to 6, wherein the microprocessor readable and executable instructions further cause the microprocessor to:
receive a valid request to acquire an additional number of digital tokens; and
in response to receiving the valid request to acquire the additional number of digital tokens, store a credit for the additional number of digital tokens in the first blockchain.

8. A method comprising:
receiving a first acceptance of a first end user license from a first user communication endpoint, wherein the acceptance of the first end user license causes a first smart contract to associate a number of digital tokens with a first user associated with the first user communication endpoint;
establishing a first communication session between the first user communication endpoint and a contact center;
receiving input that identifies a first transaction with the contact center, wherein the first transaction causes a change to the number of digital tokens associated with the first user; and
storing the changed number of digital tokens in a first blockchain.

9. The method of claim 8, further comprising:
storing information associated the first transaction in the first blockchain, wherein the stored information comprises a pointer to a first transaction record, wherein first transaction record comprises at least one of: a name of the first user, one or more communication session identifiers, a transaction type, a product or service name, an transaction treatment, a location of the first user, a time of the first transaction, a date of the first transaction, a history of the communication session as the communication session progresses through the contact center, a total time of the communication session, and an identifier of a coupon used in the transaction.

10. The method of claim 8 or claim 9, wherein the first transaction with the contact center changes how the first communication session is routed in the contact center and wherein the first transaction associated with the contact center comprises at least one of: an increased wait time in a contact center queue, a decreased wait time in the contact center queue, bypassing the contact center queue, prioritizing a trouble ticket, a modification of an Interactive Voice Response (IVR) menu, a direct communication to a specific contact center agent, a change of a destination contact center queue, a change in a communication session modality, using a self-service option, and a schedule callback.

11. The method of any one of claims 8 to 10, wherein the first smart contract is a software program that is stored with the first blockchain, wherein the first smart contract comprise a plurality of rules that determine how to change the number of digital tokens associated with the first user based on the first transaction.

12. The method of claim 11, further comprising:
receiving a second acceptance of a second end user license from a second user communication endpoint, wherein the second end user license is different from the first end user license, wherein a second smart contract associated with the second end user license comprises a plurality of rules that determine how to change the number of digital tokens associated with a second user of the second communication endpoint based on a second transaction.

13. The method of any one of claims 8 to 12, wherein the input that identifies the first transaction with the contact center comes from at least one of a digital wallet on the first communication endpoint, a contact center agent, an Interactive Voice Response (IVR) system, a self-service web page, a Rich Communication Services (RCS) plug-in, and a routing system.

14. The method of any one of claims 8 to 13, further comprising:
receiving a valid request to acquire an additional number of digital tokens; and
in response to receiving the valid request to acquire the additional number of digital tokens, storing a credit for the additional number of digital tokens in the first blockchain.

15. A non-transient computer readable medium having stored thereon instructions that cause a processor to execute a method, the method comprising:
instructions receive a first acceptance of a first end user license from a first user communication endpoint, wherein the acceptance of the first end user license causes a first smart contract to associate a number of digital tokens with a first user associated with the first user communication endpoint;
instructions to establish a first communication session between the first user communication endpoint and a contact center;
instructions to receive input that identifies a first transaction with the contact center, wherein the first transaction causes a change to the number of digital tokens associated with the first user; and
instructions to store the changed number of digital tokens in a first blockchain.
